# EUROPEAN PATENT APPLICATION

(11) **EP 4 790 639 A2**
(43) Date of publication of application: **12.08.2026**
(21) Application number: 26188129.6
(22) Date of filing: 26.06.2026
(51) Int. Cl.: G06T 5/70, G06T 5/50

(54) **DENOISING PARAMETER DETERMINATION AND IMAGE DENOISING METHOD, APPARATUS, DEVICE, AND MEDIUM**

(30) Priority: 27.03.2026 CN 202610398127
(71) Applicant: XG TECH PTE. LTD., Singapore 179098 (SG)
(72) Inventor: LIN, Tao, 179098 Singapore (SG); FAN, Man, 179098 Singapore (SG)
(74) Representative: Patentanwälte Magenbauer & Kollegen Partnerschaft mbB

(57) **Abstract**

A denoising parameter determination method, comprising: obtaining multiple denoised images corresponding to an undenoised image; for any of the denoised images: determining a difference between any of the denoised images and the undenoised image to obtain a difference image corresponding to any of the denoised images; determining a difference dispersion degree of the difference image corresponding to any of the denoised images; and performing singular value decomposition on the difference image corresponding to any of the denoised images to obtain a singular value set corresponding to any of the denoised images; and determining a singular value dispersion degree of the singular value set corresponding to any of the denoised images; based on the difference dispersion degrees, the singular value dispersion degrees respectively corresponding to the multiple denoised images, and the parameter value groups respectively corresponding to the multiple denoised images, determining a target parameter value group for image denoising processing.

## Description

### FIELD OF THE PRESENT DISCLOSURE

The present disclosure relates to the technical field of image signal processing, and in particular, to a denoising parameter determination and image denoising method, apparatus, device, and medium.

### BACKGROUND OF THE PRESENT DISCLOSURE

Denoising is an important module in an ISP (image Signal Processor). Generally, a denoising module has a great number of parameters. When a debugging personnel debugs parameters of this module, after adjusting a set of parameters, the engineer typically analyzes changes in image quality through human eye observation and comparison, which is inefficient, often consumes considerable time and effort, and makes it difficult to obtain optimal parameters.

### SUMMARY OF THE PRESENT DISCLOSURE

To solve the above technical problems, the present disclosure provides a denoising parameter determination and image denoising method, apparatus, device, and medium.

In a first aspect of the embodiments of the present disclosure, a denoising parameter determination method is provided, comprising:
obtaining multiple denoised images corresponding to a undenoised image, wherein any of the denoised images is obtained by performing denoising processing on the undenoised image using multiple denoising parameters under a corresponding parameter value group;
for any of the denoised images:
determining a difference between any of the denoised images and the undenoised image to obtain a difference image corresponding to any of the denoised images;
determining a difference dispersion degree of the difference image corresponding to any of the denoised images;
performing singular value decomposition on the difference image corresponding to any of the denoised images to obtain a singular value set corresponding to any of the denoised images; and determining a singular value dispersion degree of the singular value set corresponding to any of the denoised images;
based on the difference dispersion degrees, the singular value dispersion degrees respectively corresponding to the multiple denoised images, and the parameter value groups respectively corresponding to the multiple denoised images, determining a target parameter value group for image denoising processing.

In a second aspect of the embodiments of the present disclosure, an image denoising method is provided, comprising:
obtaining an image to be denoised and a target parameter value group of denoising parameters, wherein the target parameter value group is determined using the denoising parameter determination method of any one of the first aspect;
performing denoising processing on the image to be denoised based on the target parameter value group.

In a third aspect of the embodiments of the present disclosure, a denoising parameter determination apparatus is provided, comprising:
a first obtaining unit, configured to: obtain multiple denoised images corresponding to a undenoised image, wherein any of the denoised images is obtained by performing denoising processing on the undenoised image using multiple denoising parameters under a corresponding parameter value group;
a first determination unit, configured to, for any of the denoised images:
determine a difference between any of the denoised images and the undenoised image to obtain a difference image corresponding to any of the denoised images;
determine a difference dispersion degree of the difference image corresponding to any of the denoised images;
perform singular value decomposition on the difference image corresponding to any of the denoised images to obtain a singular value set corresponding to any of the denoised images; and determine a singular value dispersion degree of the singular value set corresponding to any of the denoised images;
a second determination unit, configured to: determine a target parameter value group for image denoising processing based on the difference dispersion degrees, the singular value dispersion degrees respectively corresponding to the multiple denoised images, and the parameter value groups respectively corresponding to the multiple denoised images.

In a fourth aspect of the embodiments of the present disclosure, an image denoising apparatus is provided, comprising:
a second obtaining unit, configured to: obtain an image to be denoised and a target parameter value group of denoising parameters, wherein the target parameter value group is determined using the denoising parameter determination apparatus of any one of the third aspect;
a denoising unit, configured to: perform denoising processing on the image to be denoised based on the target parameter value group.

In a fifth aspect of the present disclosure, an electronic device is provided, comprising:
a memory for storing a computer program;
a processor for executing the computer program stored in the memory, and when the computer program is executed, implementing the method of any embodiment of the denoising parameter determination of the first aspect or the image denoising method of the second aspect.

In a sixth aspect of the present disclosure, a computer-readable storage medium having a computer program stored thereon is provided, wherein when the computer program is executed by a processor, the method of any embodiment of the denoising parameter determination of the first aspect or the image denoising method of the second aspect is implemented.

In a seventh aspect of the present disclosure, a computer program comprising computer-readable codes is provided, wherein when the computer-readable codes are executed by a processor, the method of any embodiment of the denoising parameter determination of the first aspect or the image denoising method of the second aspect is implemented.

Based on the embodiments of the present disclosure, by obtaining multiple denoised images corresponding to a undenoised image, a correspondence between different parameter configurations and denoising effects can be established; by determining a difference between any of the denoised images and the undenoised image to obtain a difference image, the degree of influence of the denoising processing on the undenoised image can be more accurately quantified; by determining a difference dispersion degree of the difference image corresponding to any of the denoised images, the denoising strength can be measured, wherein a greater difference dispersion degree indicates more effective denoising; by performing singular value decomposition on the difference image corresponding to any of the denoised images to obtain a singular value set and determining a singular value dispersion degree thereof, it can be determined whether the denoising processing excessively removes real signals (such as texture details and edge contours) in the image, wherein a smaller singular value dispersion degree indicates that what is removed is mainly noise rather than useful information; by determining the target parameter value group for image denoising processing based on the difference dispersion degrees, the singular value dispersion degrees respectively corresponding to the multiple denoised images, and the parameter value groups respectively corresponding to the multiple denoised images, a parameter value group that both effectively removes noise and preserves image details can be selected, avoiding the inefficiency and inconsistency of traditional visual and subjective evaluations, thereby improving the accuracy of determining denoising parameters. Furthermore, by performing denoising processing on an image to be denoised based on the target parameter value group, the denoising effect can be improved.

### BRIEF DESCRIPTION OF THE DRAWINGS

FIG. 1 is an exemplary application scenario diagram to which the present disclosure is applicable.
FIG. 2 is a schematic flowchart of a denoising parameter determination method provided by an exemplary embodiment of the present disclosure.
FIG. 3 is a schematic diagram of grayscale Gaussian noise.
FIG. 4 is a histogram of Gaussian noise.
FIG. 5 is a schematic diagram of distribution of singular values.
FIG. 6 is a schematic diagram of a difference image.
FIG. 7 is a schematic diagram of pixel values of a flat region in the difference image of FIG. 6.
FIG. 8 is a schematic diagram of singular values of a texture region in the difference image of FIG. 6.
FIG. 9 is a schematic flowchart of determining a target parameter value group for image denoising processing provided by an exemplary embodiment of the present disclosure.
FIG. 10 is a schematic flowchart of obtaining multiple denoised images corresponding to a undenoised image provided by an exemplary embodiment of the present disclosure.
FIG. 11 is a schematic flowchart of determining N first parameter values provided by an exemplary embodiment of the present disclosure.
FIG. 12 is a schematic flowchart of determining a target parameter value group for image denoising processing provided by an exemplary embodiment of the present disclosure.
FIG. 13 is a schematic flowchart of determining a difference between any of the denoised images and a undenoised image provided by an exemplary embodiment of the present disclosure.
FIG. 14 is a schematic flowchart of performing singular value decomposition on the difference image corresponding to any of the denoised images provided by an exemplary embodiment of the present disclosure.
FIG. 15 is a schematic flowchart of determining a difference dispersion degree of the difference image corresponding to any of the denoised images provided by an exemplary embodiment of the present disclosure.
FIG. 16 is a schematic flowchart of determining a singular value dispersion degree of the singular value set corresponding to any of the denoised images provided by an exemplary embodiment of the present disclosure.
FIG. 17 is a schematic flowchart of determining a target parameter value group for image denoising processing provided by an exemplary embodiment of the present disclosure.
FIG. 18 is a schematic flowchart of another method for determining a target parameter value group for image denoising processing provided by an exemplary embodiment of the present disclosure.
FIG. 19 is a schematic flowchart of an image denoising method provided by an exemplary embodiment of the present disclosure.
FIG. 20 is a schematic structural diagram of a denoising parameter determination apparatus provided by an exemplary embodiment of the present disclosure.
FIG. 21 is a schematic structural diagram of a denoising parameter determination apparatus provided by yet another exemplary embodiment of the present disclosure.
FIG. 22 is a schematic structural diagram of an image denoising apparatus provided by an exemplary embodiment of the present disclosure.
FIG. 23 is a structural diagram of an electronic device provided by an exemplary embodiment of the present disclosure.

### DESCRIPTION OF THE EMBODIMENTS

To explain the present disclosure, exemplary embodiments of the present disclosure will be described in detail below with reference to the accompanying drawings. Obviously, the described embodiments are only a part of the embodiments of the present disclosure and not all embodiments, and it should be understood that the present disclosure is not limited by the exemplary embodiments.

It should be noted that: unless otherwise specifically stated, the relative arrangement, numerical expressions, and numerical values of components and steps set forth in these embodiments do not limit the scope of the present disclosure.

### Application Overview

Denoising is an important module in an ISP. In the process of implementing the present disclosure, the inventor found that when ISP debugging engineers debug the denoising module, they need to spend a lot of time and effort but still find it difficult to debug a set of good (optimal) parameters. Moreover, this approach is highly related to human visual perception, and different human eyes have different perceptual characteristics for denoising, which is too subjective and lacks objectivity. Some methods for automatically adjusting denoising module parameters employ neural networks by collecting a large number of images and inviting professional personnel to provide subjective scores to ultimately find a set of optimal parameters. This method consumes significant resources, is difficult to implement in practice, and the effect of selecting optimal parameters is poor.

### Exemplary Overview

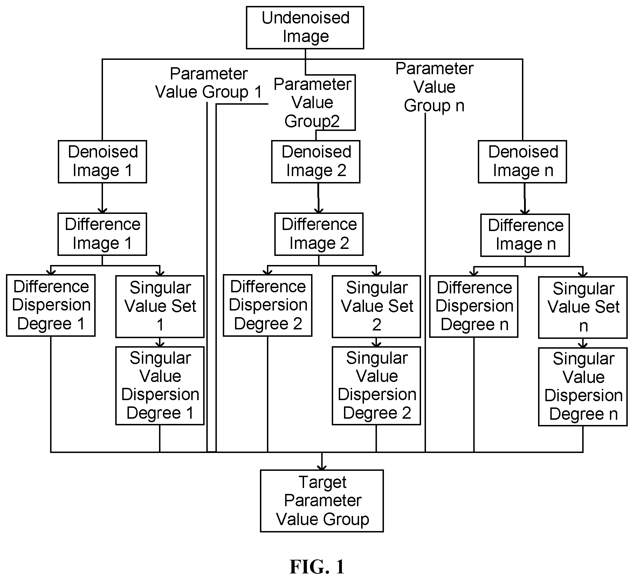

FIG. 1 is an exemplary application scenario diagram to which the present disclosure is applicable.

In any scenario requiring image denoising, such as autonomous driving, industrial inspection, security surveillance, and medical imaging, the denoising parameter determination method of the present disclosure can be used to determine a target parameter value group for image denoising processing, and the image denoising method of the present disclosure can be used to perform denoising processing on an image to be denoised, thereby improving image quality.

Specifically, taking an autonomous driving scenario as an example, denoising processing can first be performed on a undenoised image using multiple denoising parameters under corresponding parameter value groups, thereby obtaining multiple denoised images corresponding to the undenoised image. For example, denoising processing is performed on the undenoised image using parameter value group 1 to obtain denoised image 1, denoising processing is performed on the undenoised image using parameter value group 2 to obtain denoised image 2, and denoising processing is performed on the undenoised image using parameter value group n to obtain denoised image n. The parameter value groups are different from each other; for example, parameter values in different parameter value groups correspond to different denoising parameters, or corresponding parameter values in different parameter value groups have different values. In this way, multiple denoised images corresponding to the undenoised image can be obtained.

Furthermore, for any of the denoised images, a difference between any of the denoised images and the undenoised image can be determined to obtain a difference image corresponding to any of the denoised images. For example, the difference between denoised image 1 and the undenoised image is determined to obtain difference image 1 corresponding to denoised image 1, the difference between denoised image 2 and the undenoised image is determined to obtain difference image 2 corresponding to denoised image 2, ..., and the difference between denoised image n and the undenoised image is determined to obtain difference image n corresponding to denoised image n. Then, a difference dispersion degree of the difference image corresponding to any of the denoised images is determined. For example, difference dispersion degree 1 of difference image 1 corresponding to denoised image 1 is determined, difference dispersion degree 2 of difference image 2 corresponding to denoised image 2 is determined, ..., and difference dispersion degree n of difference image n corresponding to denoised image n is determined. Subsequently, singular value decomposition is performed on the difference image corresponding to any of the denoised images to obtain a singular value set corresponding to any of the denoised images. For example, singular value decomposition is performed on difference image 1 corresponding to denoised image 1 to obtain singular value set 1 corresponding to denoised image 1, singular value decomposition is performed on difference image 2 corresponding to denoised image 2 to obtain singular value set 2 corresponding to denoised image 2, ..., and singular value decomposition is performed on difference image n corresponding to denoised image n to obtain singular value set n corresponding to denoised image n. Thereafter, a singular value dispersion degree of the singular value set corresponding to any of the denoised images is determined. For example, singular value dispersion degree 1 of singular value set 1 corresponding to denoised image 1 is determined, singular value dispersion degree 2 of singular value set 2 corresponding to denoised image 2 is determined, ..., and singular value dispersion degree n of singular value set n corresponding to denoised image n is determined. Finally, based on the difference dispersion degrees, the singular value dispersion degrees, and the parameter value groups respectively corresponding to the multiple denoised images, a target parameter value group for image denoising processing is determined. For example, the target parameter value group for image denoising processing is determined, based on difference dispersion degree 1, difference dispersion degree 2, ..., difference dispersion degree n, singular value dispersion degree 1, singular value dispersion degree 2, ..., singular value dispersion degree n, parameter value group 1, parameter value group 2, ..., and parameter value group n.

When performing image denoising, denoising processing can be performed on the image to be denoised based on the target parameter value group, thereby obtaining a denoised image.

In some optional implementations, the denoising parameter determination or image denoising method may specifically be implemented using an ASIC (Application-Specific Integrated Circuit), an FPGA (Field-Programmable Gate Array), or a CPU (Central Processing Unit).

Optionally, a vehicle may further perform visual environment perception, vehicle positioning, multi-sensor fusion, path planning, vehicle control, and the like based on the denoised image, thereby implementing autonomous driving.

Based on the above, by obtaining multiple denoised images corresponding to a undenoised image, a correspondence between different parameter configurations and denoising effects can be established; by determining a difference between any of the denoised images and the undenoised image to obtain a difference image, the degree of influence of the denoising processing on the undenoised image can be more accurately quantified; by determining a difference dispersion degree of the difference image corresponding to any of the denoised images, the denoising strength can be measured, wherein a greater difference dispersion degree indicates more effective denoising; by performing singular value decomposition on the difference image corresponding to any of the denoised images to obtain a singular value set and determining a singular value dispersion degree thereof, it can be determined whether the denoising processing excessively removes real signals (such as texture details and edge contours) in the image, wherein a smaller singular value dispersion degree indicates that what is removed is mainly noise rather than useful information; by determining the target parameter value group for image denoising processing based on the difference dispersion degrees, the singular value dispersion degrees, and the parameter value groups respectively corresponding to the multiple denoised images, a parameter value group that both effectively removes noise and preserves image details can be selected, avoiding the inefficiency and inconsistency of traditional visual and subjective evaluations, thereby improving the accuracy of determining denoising parameters. Furthermore, by performing denoising processing on an image to be denoised based on the target parameter value group, the denoising effect can be improved.

### Exemplary Method

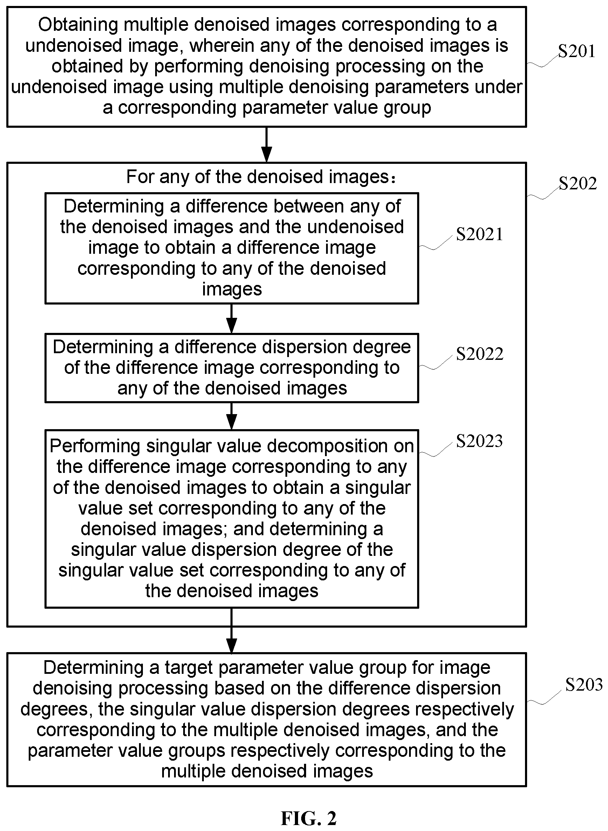

FIG. 2 is a schematic flowchart of a denoising parameter determination method provided by an exemplary embodiment of the present disclosure. This embodiment can be applied to electronic devices such as intelligent driving vehicles. As shown in FIG. 2, it includes the following steps:
Step 201: Obtaining multiple denoised images corresponding to a undenoised image, wherein any of the denoised images is obtained by performing denoising processing on the undenoised image using multiple denoising parameters under a corresponding parameter value group.

The undenoised image may be an image on which denoising processing is to be performed. In some cases, the undenoised image may be a raw image saved after turning off the denoising module of an image acquisition device (e.g., a camera). In some cases, the camera can be pointed at a scene rich in texture details, the denoising module is turned off, and a texture-rich image is saved (e.g., saved as a lossless compression format bmp image), named ori_noise, and used as the undenoised image. The undenoised image contains noise.

The denoised image may be an image obtained by performing denoising processing on the undenoised image using a corresponding parameter group. Each denoised image may correspond to one parameter group. In some cases, the denoised image may be saved as a bmp image. The multiple denoised images corresponding to the undenoised image may be named denoise_img0, denoise_img1, denoise_img2, ..., denoise_imgN, respectively.

Here, denoised images and undenoised images are relative concepts. In some cases, an image that has undergone denoising processing may also be used as a undenoised image, and denoised using the image denoising method described in the present disclosure to obtain a denoised image.

The denoising parameters may be configurable parameters used for denoising in the denoising module of the image acquisition device. The denoising parameters may be used to control the strength, thresholds, and the like of the denoising algorithm. In some cases, the number of multiple denoising parameters may be denoted as M, and each denoising parameter may be evenly or randomly divided into multiple segments, such as 16 segments, 20 segments.

The parameter value group may include parameter values of multiple denoising parameters. Each parameter value is a value of the corresponding denoising parameter. In some cases, each parameter value group may include a value combination of M denoising parameters, i.e., M parameter values. In some cases, the above parameter value groups may serve as parameter values screened out in the first round (also referred to as coarse tuning).

In some optional embodiments, each parameter file may contain a parameter value group. Accordingly, multiple parameter files can be input to the denoising module of the camera, and the denoising module performs denoising processing on the undenoised image based on the multiple parameter value groups contained in the respective parameter files to generate corresponding multiple denoised images. Furthermore, the above execution entity can obtain the multiple denoised images corresponding to the undenoised image.

In some optional implementations, denoising processing may be performed on the undenoised image as a whole using multiple parameter value groups to obtain multiple denoised images; alternatively, denoising processing may be performed on multiple different image regions of the undenoised image using multiple parameter value groups to obtain multiple denoised images.

Step 202: For any of the denoised images, the following steps are performed (including Steps 2021-2023):

Step 2021: Determining a difference between any of the denoised images and the undenoised image to obtain a difference image corresponding to any of the denoised images.

The difference image may be an image composed of differences in corresponding pixel values between the denoised image and the undenoised image.

In some optional embodiments, the RGB (Red Green Blue) values of the N denoised images from denoise_img0 to N may be subtracted from the RGB values of the ori_noise undenoised image, respectively, to obtain difference images of the three RGB channels, denoted as diff images.

Here, the difference image quantifies the changes introduced by the denoising processing, i.e., the changes of the undenoised image relative to the denoised image.

Step 2022: Determining a difference dispersion degree of the difference image corresponding to any of the denoised images.

The difference dispersion degree may represent the dispersion degree of pixel values in the difference image.

In some optional implementations, the variance stdNoise, standard deviation, or mean deviation of the difference image corresponding to each denoised image can be calculated to obtain the difference dispersion degree of the difference image.

Step 2023: Performing singular value decomposition on the difference image corresponding to any of the denoised images to obtain a singular value set corresponding to any of the denoised images; and determining a singular value dispersion degree of the singular value set corresponding to any of the denoised images.

Singular Value Decomposition (SVD) is a matrix decomposition method. Through singular value decomposition, the matrix corresponding to the difference image can be decomposed into three matrices U, Σ, and V, where the diagonal elements of Σ are the singular values. Here, U represents the left singular vectors; Σ represents a diagonal matrix with non-zero elements only on the diagonal; and V represents the right singular vectors.

The singular value set may be multiple singular values obtained after performing singular value decomposition on the difference image. The singular value set can characterize the structural properties of the difference image. Here, the singular values in the singular value set may also be referred to as eigenvalues.

The singular value dispersion degree may represent the dispersion degree of each value in the singular value set.

In some optional implementations, the singular value dispersion degree of the singular value set can be obtained by calculating the standard deviation, variance, or mean deviation of the singular value set corresponding to each denoised image.

Step 203: Determining a target parameter value group for image denoising processing based on the difference dispersion degrees, the singular value dispersion degrees respectively corresponding to the multiple denoised images, and the parameter value groups respectively corresponding to the multiple denoised images.

The target parameter value group may be a parameter value group determined from the parameter value groups respectively corresponding to the multiple denoised images based on the difference dispersion degrees and the singular value dispersion degrees respectively corresponding to the multiple denoised images.

In some optional implementations, the result of a weighted sum of the difference dispersion degree and the singular value dispersion degree corresponding to each parameter value group can be calculated, and the target parameter value group can be determined from the parameter value groups respectively corresponding to the multiple denoised images based on this result.

Based on the embodiments of the present disclosure, by obtaining multiple denoised images corresponding to a undenoised image, a correspondence between different parameter configurations and denoising effects can be established; by determining a difference between any of the denoised images and the undenoised image to obtain a difference image, the degree of influence of the denoising processing on the undenoised image can be more accurately quantified; by determining a difference dispersion degree of the difference image corresponding to any of the denoised images, the denoising strength can be measured, wherein a greater difference dispersion degree indicates more effective denoising; by performing singular value decomposition on the difference image corresponding to any of the denoised images to obtain a singular value set and determining a singular value dispersion degree thereof, it can be determined whether the denoising processing excessively removes real signals (such as texture details and edge contours) in the image, wherein a smaller singular value dispersion degree indicates that what is removed is mainly noise rather than useful information; by determining the target parameter value group for image denoising processing based on the difference dispersion degrees, the singular value dispersion degrees, and the parameter value groups respectively corresponding to the multiple denoised images, a parameter value group that both effectively removes noise and preserves image details can be selected, avoiding the inefficiency and inconsistency of traditional visual and subjective evaluations, thereby improving the accuracy of determining denoising parameters. Furthermore, by performing denoising processing on an image to be denoised based on the target parameter value group, the denoising effect can be improved.

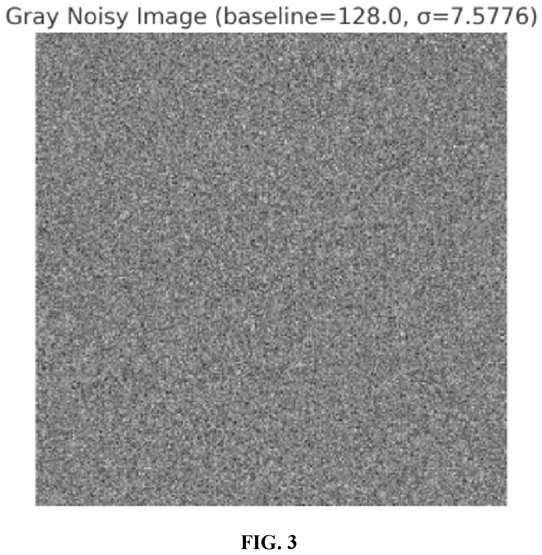

Here, with reference to FIG. 3 to FIG. 8, the noise in an image is analyzed:

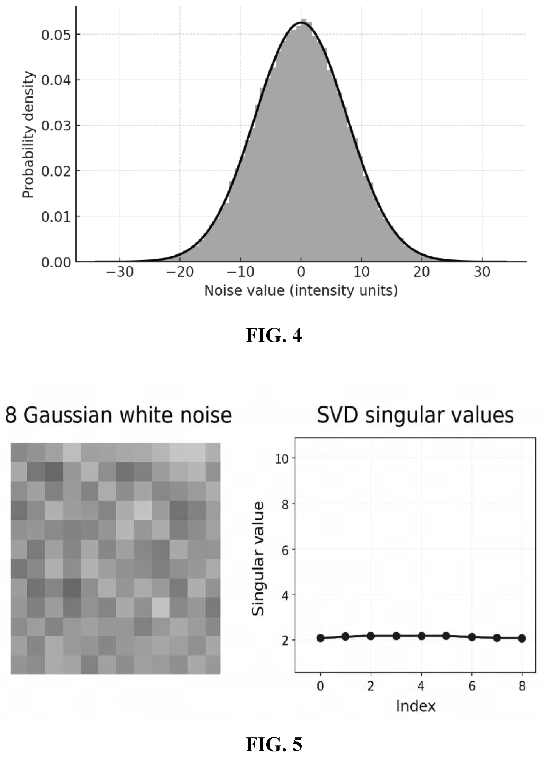

For the grayscale Gaussian noise image shown in FIG. 3, if analyzed with a histogram, it can be seen as shown in FIG. 4. The gray-filled region and the smooth curve above it in FIG. 4 conform to a Gaussian distribution, and it can be seen that the histogram of the noise almost completely fits the Gaussian distribution.

On the basis of the grayscale Gaussian noise image shown in FIG. 3, white Gaussian noise with a standard deviation of 8 (merely as an example; other values may also be used) is added thereto, and the calculated SVD eigenvalues are basically on a horizontal line, as shown in FIG. 5.

If the standard deviation of the eigenvalues (also referred to as singular values or SVD eigenvalues) is calculated, it will be found that this value is very small. From this, a conclusion can be drawn that the smaller the variance of the eigenvalues, the higher the likelihood that Gaussian white noise exists in the image.

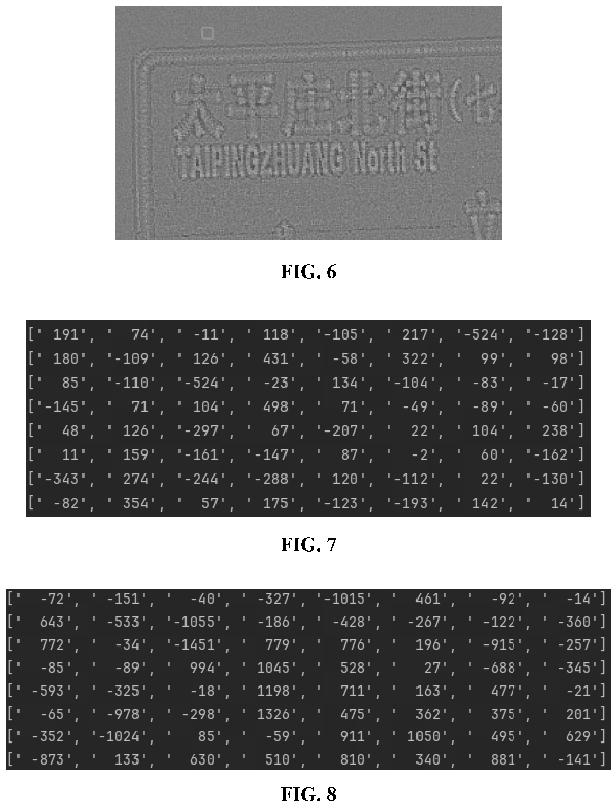

The difference between a denoised image and a undenoised image is generally considered to be noise. However, many denoising algorithms are not perfect, resulting in the removal of not only noise but also texture details and edge contours during denoising, as shown in FIG. 6. FIG. 6 is a difference image obtained by subtracting the undenoised image from the denoised image, in which the green box indicates an approximately flat region and the red box indicates a texture region.

The green box in FIG. 6 is an approximately flat region, and its specific pixel values (e.g., grayscale values, RGB values) represented in 10-bit width are shown in FIG. 7. The standard deviation of the pixel values in FIG. 7 is 193.5. The eigenvalues (singular values) thereof are [948.49, 689.54, 588.68, 580.07, 425.70, 275.77, 213.83, 4.33], and the standard deviation of the eigenvalues is 279.6.

The red box in FIG. 6 is a texture region, and its specific pixel values (e.g., grayscale values, RGB values) represented in 10-bit width are shown in FIG. 8. The standard deviation of the pixel values in FIG. 8 is 615.4. The eigenvalues (singular values) thereof are [3179.21, 2633.79, 1912.73, 1198.23, 1161.98, 691.52, 463.97, 164.04], and the standard deviation of the eigenvalues is 996.8.

It can be seen that the standard deviation of the eigenvalues in the texture region is far greater than that of the flat region.

Therefore, the larger the pixel values of the difference image itself, the better, which indicates that denoising is more effective. If the difference image is 0, it means no denoising has occurred at all. However, at the same time, the smaller the standard deviation of the eigenvalues (singular values) of the difference image, the better, which indicates that only noise has been removed rather than texture details and edge contours.

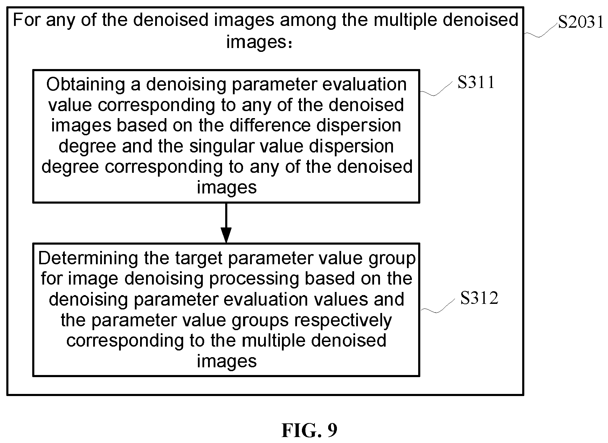

Based on the above analysis, in some optional embodiments, as shown in FIG. 9, on the basis of the embodiment shown in FIG. 2, Step 203 may include the following steps:
Step 2031: For any of the denoised images among the multiple denoised images, the following steps are performed (including Steps 311-312):
Step 311: Obtaining a denoising parameter evaluation value corresponding to any of the denoised images based on the difference dispersion degree and the singular value dispersion degree corresponding to any of the denoised images.

The denoising parameter evaluation value can be used to quantitatively evaluate the denoising effect.

In some optional implementations, the denoising parameter evaluation value DeNoiseK = the difference dispersion degree of the difference image / (the corresponding singular value dispersion degree + alpha). Here, a larger DeNoiseK value indicates that the denoising more closely meets expectations. Alpha is a constant greater than 0, used to prevent the denominator from being zero.

In some optional implementations, the denoising parameter evaluation value DeNoiseK = the difference dispersion degree of the difference image / the corresponding singular value dispersion degree.

In some optional implementations, a weighted sum calculation can be performed on the difference dispersion degree and the singular value dispersion degree corresponding to the denoised image, and the calculation result can be used as the denoising parameter evaluation value corresponding to the denoised image.

Step 312: Determining the target parameter value group for image denoising processing based on the denoising parameter evaluation values and the parameter value groups respectively corresponding to the multiple denoised images.

In some optional implementations, from the parameter value groups respectively corresponding to the multiple denoised images, the parameter value group corresponding to the largest denoising parameter evaluation value can be determined as the target parameter value group for image denoising processing.

Based on the embodiments of the present disclosure, by obtaining a denoising parameter evaluation value corresponding to any of the denoised images based on the difference dispersion degree and the singular value dispersion degree corresponding to any of the denoised images, the determined denoising parameter evaluation value can comprehensively reflect the denoising strength (corresponding to the difference dispersion degree) and the degree of preservation of real signals (corresponding to the singular value dispersion degree), avoiding the one-sidedness of single-indicator evaluation; by determining the target parameter value group for image denoising processing based on the denoising parameter evaluation values and the parameter value groups respectively corresponding to the multiple denoised images, a parameter value group with better denoising effect can be selected, thereby improving the efficiency and accuracy of parameter value group determination.

In some optional embodiments, on the basis of the embodiment shown in FIG. 2, Step 201 may include the following steps:
Step 2011: For any denoising parameter among M denoising parameters: determining N first parameter values from a value range of any denoising parameter, wherein M and N are both positive integers.

M represents the total number of denoising parameters to be adjusted.

The value range represents the selectable value interval of the denoising parameter. As an example, the value range of a denoising parameter may be 0-255.

N represents the number of parameter values selected from the value range.

The first parameter value may be a parameter value determined from the value range.

In some optional implementations, when N is 16 and the value range is 0-255, sampling can start from 8 with intervals of 16, i.e., the N first parameter values are 8, 24, 40, 56, 72, 88, 104, 120, 136, 152, 168, 184, 200, 216, 232, and 248, respectively.

In some optional implementations, the value range of the denoising parameter can be divided into N sub-ranges, and then a median value can be selected from each sub-range, or Latin Hypercube Sampling (LHS) can be used to obtain the N first parameter values.

In some optional implementations, when M is greater than or equal to 16, the Latin Hypercube Sampling number can be configured to a first value (e.g., 5000 or 6000), and when 2 < M < 16, the Latin Hypercube Sampling number can be configured to a second value (e.g., 1000). The first value is greater than the second value. Thus, when the parameter dimensionality is high, using the Latin Hypercube Sampling method can effectively reduce the number of samples, solve the combinatorial explosion problem caused by high parameter dimensionality, improve search efficiency, and ensure coverage of the parameter space.

Step 2012: Determining a first parameter value group set based on the N first parameter values corresponding to any denoising parameter among the M denoising parameters, wherein the first parameter values in each first parameter value group in the first parameter value group set has a one-to-one correspondence between the first parameter values therein and the denoising parameters among the M denoising parameters, and any two first parameter value groups in the first parameter value group set include at least one pair of different first parameter values for the same denoising parameter.

The first parameter value group set may include multiple first parameter value groups. Each first parameter value group set may correspond to one denoising parameter. Each first parameter value group may be determined based on M first parameter values (each corresponding to one denoising parameter); for example, each first parameter value group may contain M first parameter values.

In some optional implementations, each of the M denoising parameters corresponds to N first parameter values, so that the total number of first parameter values corresponding to the M denoising parameters is M×N. Based on this, one first parameter value can be selected from the N first parameter values corresponding to each of the M denoising parameters, thereby obtaining the first parameter value group set.

Step 2013: For any first parameter value group in the first parameter value group set, performing denoising processing on the undenoised image using any first parameter value group to obtain a first denoised image.

The first denoised image may be an image obtained by performing denoising processing on the undenoised image using a first parameter value group.

In some optional implementations, if the first parameter value group set includes first parameter value group 1 and first parameter value group 2, then denoising processing can be performed on the undenoised image using first parameter value group 1 to obtain first denoised image 1; and denoising processing can be performed on the undenoised image using first parameter value group 2 to obtain first denoised image 2.

Based on the embodiments of the present disclosure, by determining N first parameter values from the value range of any denoising parameter among the M denoising parameters, preliminary sampling can be performed in the parameter space to obtain M×N first parameter values; by determining the first parameter value group set based on the N first parameter values corresponding to any denoising parameter among the M denoising parameters, discrete sample points covering the parameter space can be constructed; by performing denoising processing on the undenoised image using any first parameter value group in the first parameter value group set to obtain a first denoised image, the denoising effects corresponding to different first parameter value groups can be obtained. Furthermore, by comparing the denoising effects, the target parameter value group with the best denoising effect can be more accurately determined.

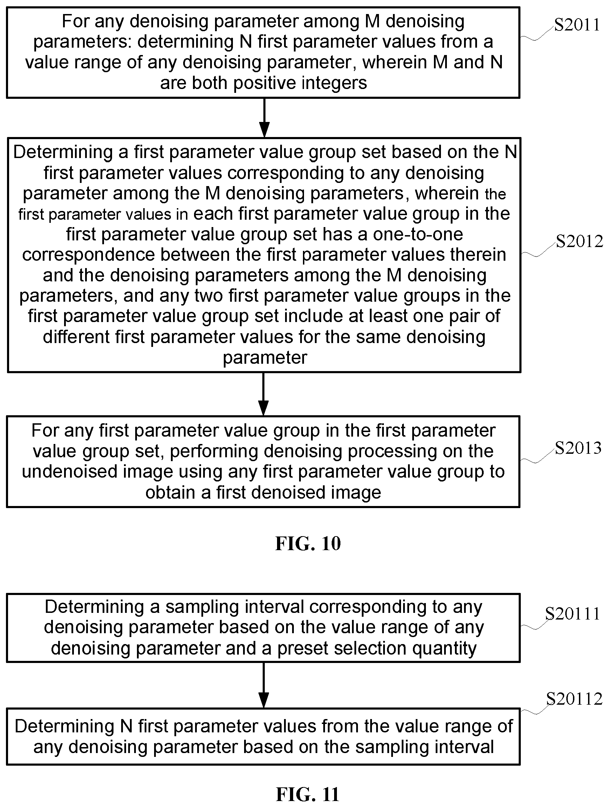

In some optional embodiments, as shown in FIG. 11, on the basis of the embodiment shown in FIG. 10, Step 2011 may include the following steps:

Step 20111: Determining a sampling interval corresponding to any denoising parameter based on the value range of any denoising parameter and a preset selection quantity.

The preset selection quantity may be a predetermined number of first parameter values to be selected for each denoising parameter. As an example, the preset selection quantity may be 16, 18, etc.

The sampling interval may represent the step size between two adjacent sampling points (i.e., first parameter values). The sampling interval determines the density of sampling points.

In some optional implementations, the difference between the upper limit value and the lower limit value of the value range can first be calculated, and then the sampling interval can be determined based on this difference and the preset selection quantity. For example, if the value range of a certain denoising parameter is 0-255 and the preset selection quantity is 16, then 255 ÷ 16 ≈ 16 can be determined as the sampling interval.

Step 20112: Determining N first parameter values from the value range of any denoising parameter based on the sampling interval.

In some optional implementations, N first parameter values can be determined from the value range of any denoising parameter based on the sampling interval according to a preset strategy (e.g., random sampling or Latin Hypercube Sampling). For example, when the value range of a certain denoising parameter is 0-255 and the preset selection quantity is 16, jump point sampling can start from 8 with intervals of 16, i.e., the N first parameter values are 8, 24, 40, 56, 72, 88, 104, 120, 136, 152, 168, 184, 200, 216, 232, and 248, respectively.

Based on the embodiments of the present disclosure, by determining the sampling interval corresponding to any denoising parameter based on the value range and the preset selection quantity of any denoising parameter, it can be ensured that the sampling points (first parameter values) are uniformly distributed; by determining N first parameter values from the value range of any denoising parameter based on the sampling interval, the entire value range of the denoising parameter can be covered, avoiding the subjectivity and incompleteness of manual selection. By setting the sampling interval, the computational load can be controlled while ensuring coverage, providing balanced first parameter values and avoiding missing potential optimal parameter value groups.

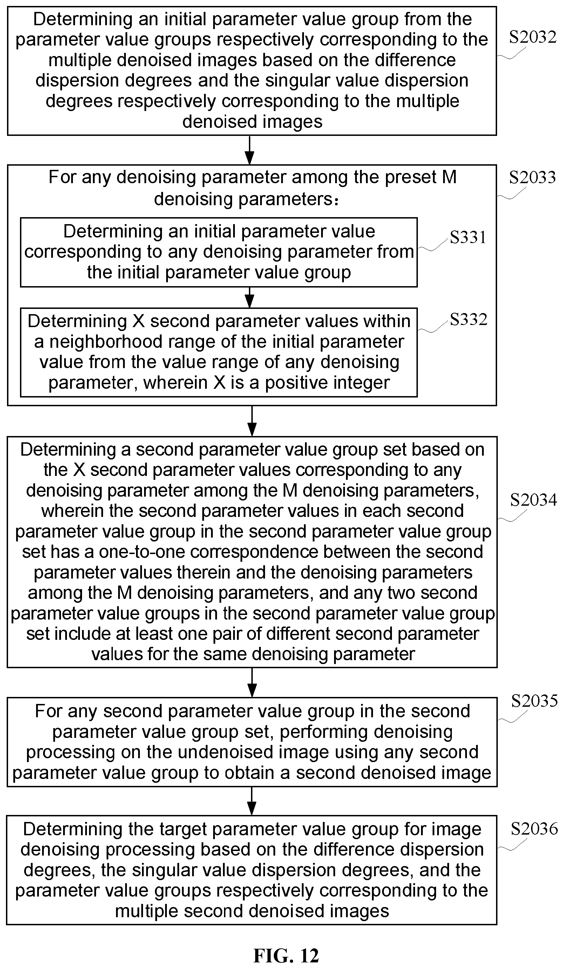

In some optional embodiments, as shown in FIG. 12, on the basis of the embodiment shown in FIG. 10, Step 203 may include the following steps:

Step 2032: Determining an initial parameter value group from the parameter value groups respectively corresponding to the multiple denoised images based on the difference dispersion degrees and the singular value dispersion degrees respectively corresponding to the multiple denoised images.

The initial parameter value group may be a parameter value group preliminarily determined from the parameter value groups respectively corresponding to the multiple denoised images based on the difference dispersion degrees and the singular value dispersion degrees respectively corresponding to the multiple denoised images. In some cases, the initial parameter value group may also be referred to as the optimal parameter combination screened out during the coarse tuning stage.

In some optional implementations, from the parameter value groups respectively corresponding to the multiple denoised images, the parameter value group corresponding to the largest denoising parameter evaluation value can be determined as the initial parameter value group. Alternatively, the initial parameter value group can be determined from the parameter value groups respectively corresponding to the multiple denoised images by performing a weighted sum calculation on the difference dispersion degrees and the singular value dispersion degrees respectively corresponding to the multiple denoised images.

Step 2033: For any denoising parameter among the preset M denoising parameters, the following steps are performed (including Steps 331-332):

Step 331: Determining an initial parameter value corresponding to any denoising parameter from the initial parameter value group.

The initial parameter value may be any parameter value in the initial parameter value group. Each initial parameter value corresponds to one denoising parameter.

Here, since each parameter value in the initial parameter value group corresponds to one denoising parameter, the parameter value corresponding to any denoising parameter, i.e., the initial parameter value, can be determined from the initial parameter value group.

Step 332: Determining X second parameter values within a neighborhood range of the initial parameter value from the value range of any denoising parameter, wherein X is a positive integer.

The neighborhood range may be a local region near the initial parameter value within the value range of the corresponding denoising parameter. For example, if the value range of the denoising parameter is 0-255 and the initial parameter value is 40, then the neighborhood range of the initial parameter value can be determined as 30-50. The neighborhood range limits the scope of the fine search.

The second parameter value may be a parameter value selected from the above neighborhood range.

In some optional implementations, X second parameter values can be selected from the neighborhood range according to a preset strategy (e.g., random or Latin Hypercube Sampling). For example, if the neighborhood range is 25-55 and X is 31, then the X second parameter values may be 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, and 55, respectively.

Step 2034: Determining a second parameter value group set based on the X second parameter values corresponding to any denoising parameter among the M denoising parameters, wherein the second parameter values in each second parameter value group in the second parameter value group set has a one-to-one correspondence between the second parameter values therein and the denoising parameters among the M denoising parameters, and any two second parameter value groups in the second parameter value group set include at least one pair of different second parameter values for the same denoising parameter.

The second parameter value group set may include multiple second parameter value groups. Each second parameter value group set may correspond to one denoising parameter. Each second parameter value group may be determined based on X second parameter values (each corresponding to one denoising parameter); for example, each second parameter value group may contain X second parameter values.

In some optional implementations, each of the M denoising parameters corresponds to X second parameter values, so that the total number of second parameter values corresponding to the M denoising parameters is M×X. Based on this, one second parameter value can be selected from the X second parameter values corresponding to each of the M denoising parameters, thereby obtaining the second parameter value group set.

Step 2035: For any second parameter value group in the second parameter value group set, performing denoising processing on the undenoised image using any second parameter value group to obtain a second denoised image.

The second denoised image may be an image obtained by performing denoising processing on the undenoised image using a second parameter value group.

In some optional implementations, if the second parameter value group set includes second parameter value group 1 and second parameter value group 2, then denoising processing can be performed on the undenoised image using second parameter value group 1 to obtain second denoised image 1; and denoising processing can be performed on the undenoised image using second parameter value group 2 to obtain second denoised image 2.

Step 2036: Determining the target parameter value group for image denoising processing based on the difference dispersion degrees, the singular value dispersion degrees, and the parameter value groups respectively corresponding to the multiple second denoised images.

In some optional implementations, the result of a weighted sum of the difference dispersion degrees and the singular value dispersion degrees respectively corresponding to the multiple second denoised images can be calculated, and the target parameter value group can be determined from the parameter value groups respectively corresponding to the multiple second denoised images based on this result.

In some optional implementations, from the parameter value groups respectively corresponding to the multiple second denoised images, the parameter value group corresponding to the largest denoising parameter evaluation value can be determined as the target parameter value group for image denoising processing. Here, the denoising parameter evaluation value is determined based on the difference dispersion degree and the singular value dispersion degree.

Based on the embodiments of the present disclosure, by determining an initial parameter value group from the parameter value groups respectively corresponding to the multiple denoised images based on the difference dispersion degrees and the singular value dispersion degrees respectively corresponding to the multiple denoised images, a parameter value group with better performance can be screened out during the coarse tuning stage as a starting point for fine tuning; by determining an initial parameter value corresponding to any denoising parameter from the initial parameter value group for any denoising parameter among the preset M denoising parameters, and determining X second parameter values within a neighborhood range of the initial parameter value from the value range of any denoising parameter, a local fine search can be performed near the initial parameter value, improving the precision of parameter value optimization; by determining the second parameter value group set based on the X second parameter values corresponding to any denoising parameter among the M denoising parameters, parameter values near the initial parameter value can be determined; by performing denoising processing on the undenoised image using any second parameter value group in the second parameter value group set to obtain a second denoised image, denoising effect data for the fine tuning stage can be obtained; by determining the target parameter value group for image denoising processing based on the difference dispersion degrees, the singular value dispersion degrees respectively corresponding to the multiple second denoised images, and the parameter value groups respectively corresponding to the multiple second denoised images, the optimal parameter value group, i.e., the target parameter value group, can be found within the local range. This two-stage search method ensures both search efficiency and parameter optimization precision, avoiding the computational burden of comprehensive exhaustive serach in high-dimensional parameter spaces.

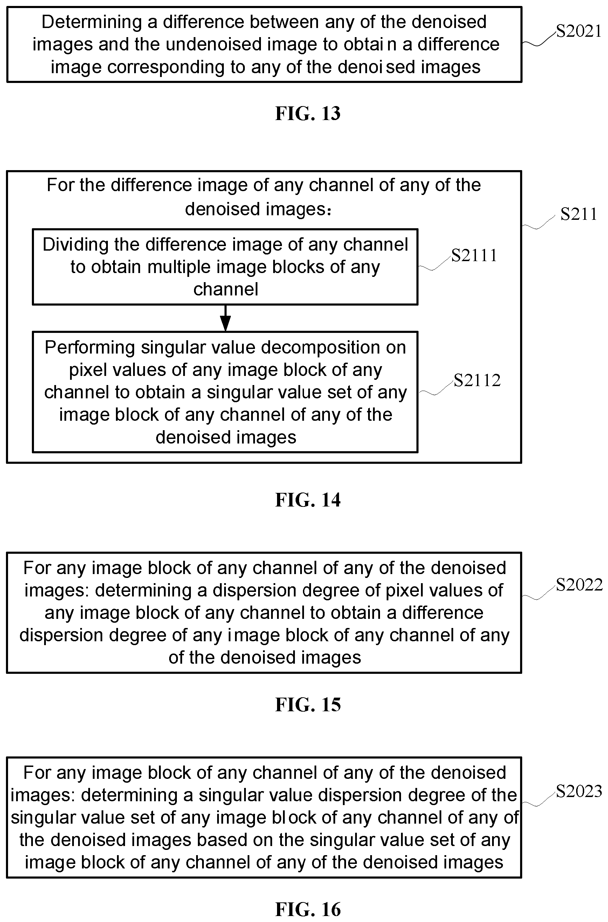

In some optional embodiments, as shown in FIG. 13, on the basis of the embodiment shown in FIG. 2, Step 202 may include the following steps:

Step 2021: Determining a difference between pixel values of any channel of any of the denoised images and pixel values of a corresponding channel of the undenoised image to obtain a difference image corresponding to any channel of any of the denoised images.

The channel may represent a color component of the denoised image. As an example, the above channel may be one of the following: R channel, G channel, or B channel.

The pixel value may be the numerical value of each pixel in the denoised image. The pixel value represents the intensity or color component value of the image pixel.

In some optional implementations, if the denoised images include denoised image 1 and denoised image 2, then for denoised image 1: the difference between the pixel values of the R channel of denoised image 1 and the pixel values of the R channel of the undenoised image can be determined to obtain the difference image corresponding to the R channel of denoised image 1; the difference between the pixel values of the G channel of denoised image 1 and the pixel values of the G channel of the undenoised image can be determined to obtain the difference image corresponding to the G channel of denoised image 1; the difference between the pixel values of the B channel of denoised image 1 and the pixel values of the B channel of the undenoised image can be determined to obtain the difference image corresponding to the B channel of denoised image 1. For denoised image 2: the difference between the pixel values of the R channel of denoised image 2 and the pixel values of the R channel of the undenoised image can be determined to obtain the difference image corresponding to the R channel of denoised image 2; the difference between the pixel values of the G channel of denoised image 2 and the pixel values of the G channel of the undenoised image can be determined to obtain the difference image corresponding to the G channel of denoised image 2; the difference between the pixel values of the B channel of denoised image 2 and the pixel values of the B channel of the undenoised image can be determined to obtain the difference image corresponding to the B channel of denoised image 2.

Based on the embodiments of the present disclosure, by determining the difference between pixel values of any channel of any of the denoised images and pixel values of a corresponding channel of the undenoised image to obtain the difference image corresponding to any channel of any of the denoised images, noise analysis and evaluation can be performed separately for each channel, avoiding mutual interference between different color channels; this channel-separation processing method can more precisely capture the noise characteristics of different color components, and through channel-separation processing, more precise noise analysis and parameter adjustment can be performed for the characteristics of different color components, thereby improving the denoising effect.

In some optional embodiments, as shown in FIG. 14, on the basis of the embodiment shown in FIG. 13, Step 2021 may include the following steps:
Step 211: For the difference image of any channel of any of the denoised images, the following steps are performed (including Steps 2111-2112):
Step 2111: Dividing the difference image of any channel to obtain multiple image blocks of any channel.

An image block may be an image region obtained by dividing the difference image. The division into image blocks facilitates local characteristic analysis.

In some optional implementations, the difference image of the R channel can be divided to obtain multiple image blocks of the R channel; the difference image of the G channel can be divided to obtain multiple image blocks of the G channel; and the difference image of the B channel can be divided to obtain multiple image blocks of the B channel.

In some optional implementations, the difference image of any channel can be divided by setting blocks of a fixed size (such as 8×8, 16×8, 16×16, or 32×32 pixels) to obtain multiple image blocks of any channel.

Step 2112: Performing singular value decomposition on pixel values of any image block of any channel to obtain a singular value set of any image block of any channel of any of the denoised images.

In some optional implementations, singular value decomposition can be performed on the pixel values of image block 1 of the R channel of denoised image 1 to obtain the singular value set of image block 1 of the R channel of denoised image 1; singular value decomposition can be performed on the pixel values of image block 2 of the R channel of denoised image 1 to obtain the singular value set of image block 2 of the R channel of denoised image 1; ...; singular value decomposition can be performed on the pixel values of image block n of the R channel of denoised image 1 to obtain the singular value set of image block n of the R channel of denoised image 1; singular value decomposition can be performed on the pixel values of image block 1 of the G channel of denoised image 1 to obtain the singular value set of image block 1 of the G channel of denoised image 1; singular value decomposition can be performed on the pixel values of image block 2 of the G channel of denoised image 1 to obtain the singular value set of image block 2 of the G channel of denoised image 1; ...; singular value decomposition can be performed on the pixel values of image block n of the G channel of denoised image 1 to obtain the singular value set of image block n of the G channel of denoised image 1; singular value decomposition can be performed on the pixel values of image block 1 of the B channel of denoised image 1 to obtain the singular value set of image block 1 of the B channel of denoised image 1; singular value decomposition can be performed on the pixel values of image block 2 of the B channel of denoised image 1 to obtain the singular value set of image block 2 of the B channel of denoised image 1; ...; singular value decomposition can be performed on the pixel values of image block n of the B channel of denoised image 1 to obtain the singular value set of image block n of the B channel of denoised image 1. The processing for denoised images 2 to n can refer to the above description.

Based on the embodiments of the present disclosure, by dividing the difference image of any channel of any of the denoised images to obtain multiple image blocks of any channel, the global difference image analysis can be transformed into local image block analysis to obtain noise characteristic differences of different image blocks; by performing singular value decomposition on pixel values of any image block of any channel to obtain the singular value set of any image block of any channel of any of the denoised images, the structured features of local image blocks can be analyzed to determine whether the image block contains random noise or meaningful image structures, thereby determining more accurate denoising parameters for different regional characteristics.

In some optional embodiments, as shown in FIG. 15, on the basis of the embodiment shown in FIG. 14, Step 202 may include the following steps:

Step 2022: For any image block of any channel of any of the denoised images: determining a dispersion degree of pixel values of any image block of any channel to obtain a difference dispersion degree of any image block of any channel of any of the denoised images.

The dispersion degree represents the dispersion degree of pixel values of pixel points relative to the average value. For example, the dispersion degree can be determined based on the standard deviation and/or variance.

In some optional implementations, the dispersion degree of pixel values of image block 1 of the R channel of denoised image 1 can be determined to obtain the difference dispersion degree of image block 1 of the R channel of denoised image 1; the dispersion degree of pixel values of image block 2 of the R channel of denoised image 1 can be determined to obtain the difference dispersion degree of image block 2 of the R channel of denoised image 1; ...; the dispersion degree of pixel values of image block n of the R channel of denoised image 1 can be determined to obtain the difference dispersion degree of image block n of the R channel of denoised image 1; the dispersion degree of pixel values of image block 1 of the G channel of denoised image 1 can be determined to obtain the difference dispersion degree of image block 1 of the G channel of denoised image 1; the dispersion degree of pixel values of image block 2 of the G channel of denoised image 1 can be determined to obtain the difference dispersion degree of image block 2 of the G channel of denoised image 1; ...; the dispersion degree of pixel values of image block n of the G channel of denoised image 1 can be determined to obtain the difference dispersion degree of image block n of the G channel of denoised image 1; the dispersion degree of pixel values of image block 1 of the B channel of denoised image 1 can be determined to obtain the difference dispersion degree of image block 1 of the B channel of denoised image 1; the dispersion degree of pixel values of image block 2 of the B channel of denoised image 1 can be determined to obtain the difference dispersion degree of image block 2 of the B channel of denoised image 1; ...; the dispersion degree of pixel values of image block n of the B channel of denoised image 1 can be determined to obtain the difference dispersion degree of image block n of the B channel of denoised image 1. The processing method for denoised images 2 to n can refer to the above description.

Based on the embodiments of the present disclosure, by determining the dispersion degree of pixel values of any image block of any channel of any of the denoised images to obtain the difference dispersion degree of any image block of any channel of any of the denoised images, the denoising strength of local regions (image blocks) can be quantitatively evaluated; by calculating the local dispersion degree, noise characteristic differences of different regions of the difference image can be captured, thereby distinguishing the denoising effects of different regions, such as different sensitivities of flat regions and texture regions to denoising parameters, thus providing finer-grained evaluation indicators for global optimization.

In some optional embodiments, as shown in FIG. 16, on the basis of the embodiment shown in FIG. 14, Step 202 may include the following steps:
Step 2023: For any image block of any channel of any of the denoised images: determining a singular value dispersion degree of the singular value set of any image block of any channel of any of the denoised images based on the singular value set of any image block of any channel of any of the denoised images.

In some optional implementations, the singular value dispersion degree of the singular value set of image block 1 of the R channel of denoised image 1 can be determined based on the singular value set of image block 1 of the R channel of denoised image 1; the singular value dispersion degree of the singular value set of image block 2 of the R channel of denoised image 1 can be determined based on the singular value set of image block 2 of the R channel of denoised image 1; ...; the singular value dispersion degree of the singular value set of image block n of the R channel of denoised image 1 can be determined based on the singular value set of image block n of the R channel of denoised image 1; the singular value dispersion degree of the singular value set of image block 1 of the G channel of denoised image 1 can be determined based on the singular value set of image block 1 of the G channel of denoised image 1; the singular value dispersion degree of the singular value set of image block 2 of the G channel of denoised image 1 can be determined based on the singular value set of image block 2 of the G channel of denoised image 1; ...; the singular value dispersion degree of the singular value set of image block n of the G channel of denoised image 1 can be determined based on the singular value set of image block n of the G channel of denoised image 1; the singular value dispersion degree of the singular value set of image block 1 of the B channel of denoised image 1 can be determined based on the singular value set of image block 1 of the B channel of denoised image 1; the singular value dispersion degree of the singular value set of image block 2 of the B channel of denoised image 1 can be determined based on the singular value set of image block 2 of the B channel of denoised image 1; ...; the singular value dispersion degree of the singular value set of image block n of the B channel of denoised image 1 can be determined based on the singular value set of image block n of the B channel of denoised image 1. The processing for denoised images 2 to n can refer to the above description.

Based on the embodiments of the present disclosure, by determining the singular value dispersion degree of the singular value set of any image block of any channel of any of the denoised images based on the singular value set of any image block of any channel of any of the denoised images, it can be analyzed whether the local region (image block) contains structured information; a smaller singular value dispersion degree indicates that the region mainly contains random noise; a larger singular value dispersion degree indicates that the region contains more meaningful image structures, such as textures or edges. By calculating the singular value dispersion degree, noise and real signals can be objectively distinguished, thereby determining a target parameter value group with better denoising effect.

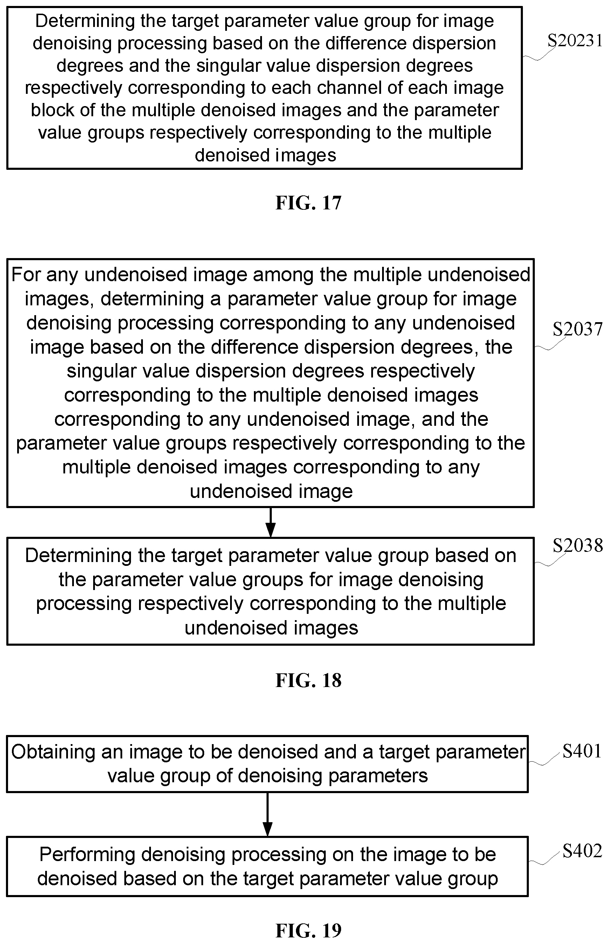

In some optional embodiments, as shown in FIG. 17, on the basis of the embodiment shown in FIG. 16, Step 2023 may include the following steps:
Step 20231: Determining the target parameter value group for image denoising processing based on the difference dispersion degrees and the singular value dispersion degrees respectively corresponding to each channel of each image block of the multiple denoised images and the parameter value groups respectively corresponding to the multiple denoised images.

In some optional embodiments, a denoising parameter evaluation value corresponding to denoised image 1 can be determined based on the difference dispersion degree and singular value dispersion degree corresponding to the R channel of image block 1 of denoised image 1, the difference dispersion degree and singular value dispersion degree corresponding to the G channel of image block 1 of denoised image 1, the difference dispersion degree and singular value dispersion degree corresponding to the B channel of image block 1 of denoised image 1, the difference dispersion degree and singular value dispersion degree corresponding to the R channel of image block 2 of denoised image 1, the difference dispersion degree and singular value dispersion degree corresponding to the G channel of image block 2 of denoised image 1, the difference dispersion degree and singular value dispersion degree corresponding to the B channel of image block 2 of denoised image 1, ..., the difference dispersion degree and singular value dispersion degree corresponding to the R channel of image block n of denoised image 1, the difference dispersion degree and singular value dispersion degree corresponding to the G channel of image block n of denoised image 1, and the difference dispersion degree and singular value dispersion degree corresponding to the B channel of image block n of denoised image 1. The processing for denoised images 2 to n can refer to the above description. In this way, the denoising parameter evaluation values respectively corresponding to denoised images 1 to n are obtained. Then, the largest denoising parameter evaluation value is determined from the denoising parameter evaluation values respectively corresponding to denoised images 1 to n, and the parameter value group used by the denoised image corresponding to the largest denoising parameter evaluation value is taken as the target parameter value group.

In some optional embodiments, the denoising parameter evaluation value corresponding to each image block can be determined based on the denoising parameter evaluation values respectively calculated for the three RGB channels of the image block. For example, a weighted average or weighted sum is performed on the denoising parameter evaluation values respectively calculated for the three RGB channels of the image block (e.g., the weights corresponding to the R, G, and B channels are 0.3, 0.6, and 0.1, respectively, to conform to the visual perception characteristics of humans) to obtain the denoising parameter evaluation value corresponding to the image block. Furthermore, the denoising parameter evaluation values corresponding to the respective image blocks of the denoised image can be accumulated to obtain the denoising parameter evaluation value of the denoised image.

Based on the embodiments of the present disclosure, by determining the target parameter value group for image denoising processing based on the difference dispersion degrees and the singular value dispersion degrees respectively corresponding to each channel of each image block of the multiple denoised images and the parameter value groups respectively corresponding to the multiple denoised images, the denoising effects of local regions (image blocks) and color channels of the denoised images can be comprehensively considered, avoiding global performance degradation caused by local optimization, thereby balancing the denoising requirements of different regions and channels, finding the overall optimal target parameter value group, and ensuring that the target parameter value group achieves good denoising effects across various image content and color components.

In some optional embodiments, the number of undenoised images is a preset number, and different undenoised images correspond to different scenes.

The preset number may be a preset positive integer, for example, the preset number may be 5.

The scene may represent the type or environment of the image. In some cases, the scene corresponding to the undenoised image may be a scene rich in texture details, such as colorful dead leaves, blue sky with white clouds and green trees.

On this basis, as shown in FIG. 18, on the basis of the embodiment shown in FIG. 2, Step 203 may include the following steps:
Step 2037: For any undenoised image among the multiple undenoised images, determining a parameter value group for image denoising processing corresponding to any undenoised image based on the difference dispersion degrees, the singular value dispersion degrees respectively corresponding to the multiple denoised images corresponding to any undenoised image, and the parameter value groups respectively corresponding to the multiple denoised images corresponding to any undenoised image.

The parameter value group for image denoising processing may be a parameter value group determined for a single scene.

In some optional implementations, a parameter value group can be independently determined for each scene.

Step 2038: Determining the target parameter value group based on the parameter value groups for image denoising processing respectively corresponding to the multiple undenoised images.

The target parameter value group may be a parameter value group obtained based on the optimization results of multiple scenes.

In some optional implementations, the median of the corresponding parameter values of the parameter value groups determined for each scene (i.e., the parameter value groups for image denoising processing respectively corresponding to the multiple undenoised images) can be taken as the target parameter value group.

Based on the embodiments of the present disclosure, by setting the number of undenoised images to a preset number, wherein different undenoised images correspond to different scenes, diversified image content and noise characteristics can be covered, improving the robustness of determining the target parameter value group; by determining a parameter value group for image denoising processing corresponding to any undenoised image among the multiple undenoised images based on the difference dispersion degrees, the singular value dispersion degrees respectively corresponding to the multiple denoised images corresponding to any undenoised image, and the parameter value groups respectively corresponding to the multiple denoised images corresponding to any undenoised image, the optimal parameter value group can be found for each specific scene; by determining the target parameter value group based on the parameter value groups for image denoising processing respectively corresponding to the multiple undenoised images, the optimization results of multiple scenes can be synthesized to obtain a target parameter value group with wider adaptability.

Any denoising parameter determination method provided by the embodiments of the present disclosure may be executed by any suitable device having data processing capability, including but not limited to: terminal devices and servers, etc. Alternatively, any denoising parameter determination method provided by the embodiments of the present disclosure may be executed by a processor, for example, the processor executes any denoising parameter determination method mentioned in the embodiments of the present disclosure by invoking corresponding instructions stored in a memory. This will not be described in detail below.

FIG. 19 is a schematic flowchart of an image denoising method provided by an exemplary embodiment of the present disclosure. This embodiment can be applied to electronic devices such as intelligent driving vehicles. As shown in FIG. 19, it includes the following steps:
Step 401: Obtaining an image to be denoised and a target parameter value group of denoising parameters.

Here, the target parameter value group is determined using any of the above denoising parameter determination methods.

Step 402: Performing denoising processing on the image to be denoised based on the target parameter value group.

In some optional implementations, the target parameter value group can be configured to the denoising module of the image processing device to drive the denoising algorithm to perform denoising processing on the image to be denoised.

Based on the embodiments of the present disclosure, by obtaining multiple denoised images corresponding to a undenoised image, a correspondence between different parameter configurations and denoising effects can be established; by determining a difference between any of the denoised images and the undenoised image to obtain a difference image, the degree of influence of the denoising processing on the undenoised image can be more accurately quantified; by determining a difference dispersion degree of the difference image corresponding to any of the denoised images, the denoising strength can be measured, wherein a greater difference dispersion degree indicates more effective denoising; by performing singular value decomposition on the difference image corresponding to any of the denoised images to obtain a singular value set and determining a singular value dispersion degree thereof, it can be determined whether the denoising processing excessively removes real signals (such as texture details and edge contours) in the image, wherein a smaller singular value dispersion degree indicates that what is removed is mainly noise rather than useful information; by determining the target parameter value group for image denoising processing based on the difference dispersion degrees, the singular value dispersion degrees respectively corresponding to the multiple denoised images, and the parameter value groups respectively corresponding to the multiple denoised images, a parameter value group that both effectively removes noise and preserves image details can be selected, avoiding the inefficiency and inconsistency of traditional human eye and subjective evaluations, thereby improving the accuracy of determining denoising parameters. Furthermore, by performing denoising processing on an image to be denoised based on the target parameter value group, the denoising effect can be improved.

Any image denoising method provided by the embodiments of the present disclosure may be executed by any suitable device having data processing capability, including but not limited to: terminal devices and servers, etc. Alternatively, any image denoising method provided by the embodiments of the present disclosure may be executed by a processor, for example, the processor executes any image denoising method mentioned in the embodiments of the present disclosure by invoking corresponding instructions stored in a memory. This will not be described in detail below.

For the implementation of any image denoising method provided by the embodiments of the present disclosure, reference can be made to any denoising parameter determination method provided by the embodiments of the present disclosure. This will not be described in detail here.

### Exemplary Apparatus

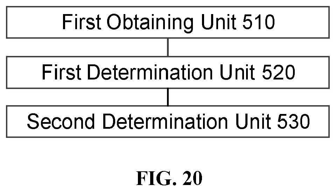

FIG. 20 is a schematic structural diagram of a denoising parameter determination apparatus provided by an exemplary embodiment of the present disclosure. The denoising parameter determination apparatus of the embodiments of the present disclosure can be used to implement the denoising parameter determination method of any of the above embodiments. As shown in FIG. 20, the denoising parameter determination apparatus of this embodiment includes:
a first obtaining unit 510, configured to: obtain multiple denoised images corresponding to a undenoised image, wherein any of the denoised images is obtained by performing denoising processing on the undenoised image using multiple denoising parameters under a corresponding parameter value group;
a first determination unit 520, configured to, for any of the denoised images:
determine a difference between any of the denoised images and the undenoised image to obtain a difference image corresponding to any of the denoised images;
determine a difference dispersion degree of the difference image corresponding to any of the denoised images;
perform singular value decomposition on the difference image corresponding to any of the denoised images to obtain a singular value set corresponding to any of the denoised images; and determine a singular value dispersion degree of the singular value set corresponding to any of the denoised images;
a second determination unit 530, configured to: determine a target parameter value group for image denoising processing based on the difference dispersion degrees, the singular value dispersion degrees, and the parameter value groups respectively corresponding to the multiple denoised images.

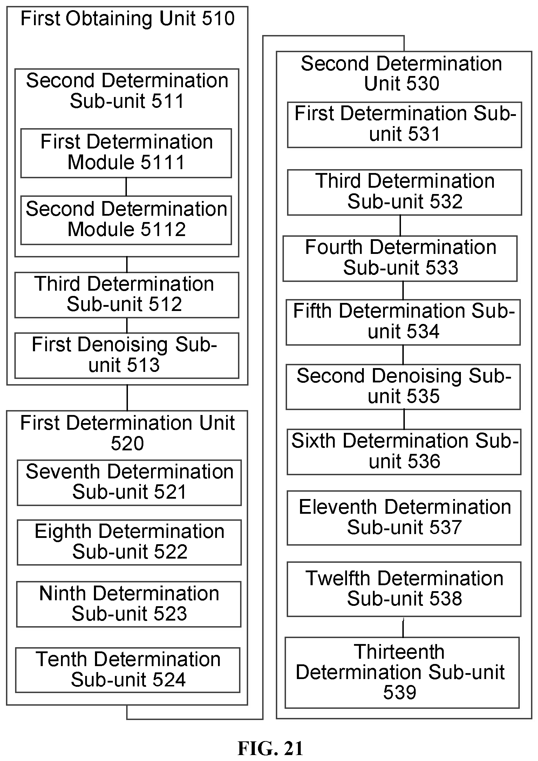

FIG. 21 is a schematic structural diagram of a denoising parameter determination apparatus provided by yet another exemplary embodiment of the present disclosure. As shown in FIG. 21, on the basis of the embodiment shown in FIG. 20, in some possible implementations, the second determination unit 530 includes:
a first determination sub-unit 531, configured to, for any of the denoised images among the multiple denoised images:
obtain a denoising parameter evaluation value corresponding to any of the denoised images based on the difference dispersion degree and the singular value dispersion degree corresponding to any of the denoised images;
determine the target parameter value group for image denoising processing based on the denoising parameter evaluation values and the parameter value groups respectively corresponding to the multiple denoised images.

In some optional implementations, the first obtaining unit 510 includes:
a second determination sub-unit 511, configured to, for any denoising parameter among M denoising parameters:
determine N first parameter values from a value range of any denoising parameter, wherein M and N are both positive integers;
a third determination sub-unit 512, configured to: determine a first parameter value group set based on the N first parameter values corresponding to any denoising parameter among the M denoising parameters, wherein the first parameter values in each first parameter value group in the first parameter value group set has a one-to-one correspondence between the first parameter values therein and the denoising parameters among the M denoising parameters, and any two first parameter value groups in the first parameter value group set include at least one pair of different first parameter values for the same denoising parameter;
a first denoising sub-unit 513, configured to: for any first parameter value group in the first parameter value group set, perform denoising processing on the undenoised image using any first parameter value group to obtain a first denoised image.

In some optional implementations, the second determination sub-unit 511 includes:
a first determination module 5111, configured to: determine a sampling interval corresponding to any denoising parameter based on the value range of any denoising parameter and a preset selection quantity;
a second determination module 5112, configured to: determine N first parameter values from the value range of any denoising parameter based on the sampling interval.

In some optional implementations, the second determination unit 530 includes:
a third determination sub-unit 532, configured to: determine an initial parameter value group from the parameter value groups respectively corresponding to the multiple denoised images based on the difference dispersion degrees and the singular value dispersion degrees respectively corresponding to the multiple denoised images;
a fourth determination sub-unit 533, configured to, for any denoising parameter among the preset M denoising parameters:
determine an initial parameter value corresponding to any denoising parameter from the initial parameter value group;
determine X second parameter values within a neighborhood range of the initial parameter value from the value range of any denoising parameter, wherein X is a positive integer;
a fifth determination sub-unit 534, configured to: determine a second parameter value group set based on the X second parameter values corresponding to any denoising parameter among the M denoising parameters, wherein the second parameter values in each second parameter value group in the second parameter value group set has a one-to-one correspondence between the second parameter values therein and the denoising parameters among the M denoising parameters, and any two second parameter value groups in the second parameter value group set include at least one pair of different second parameter values for the same denoising parameter;
a second denoising sub-unit 535, configured to: for any second parameter value group in the second parameter value group set, perform denoising processing on the undenoised image using any second parameter value group to obtain a second denoised image;
a sixth determination sub-unit 536, configured to: determine the target parameter value group for image denoising processing based on the difference dispersion degrees, the singular value dispersion degrees respectively corresponding to the multiple second denoised images, and the parameter value groups respectively corresponding to the multiple second denoised images.

In some optional implementations, the first determination unit 520 includes:
a seventh determination sub-unit 521, configured to: determine a difference between pixel values of any channel of any of the denoised images and pixel values of a corresponding channel of the undenoised image to obtain a difference image corresponding to any channel of any of the denoised images.

In some optional implementations, the first determination unit 520 includes:
an eighth determination sub-unit 522, configured to, for the difference image of any channel of any of the denoised images:
divide the difference image of any channel to obtain multiple image blocks of any channel;
perform singular value decomposition on pixel values of any image block of any channel to obtain a singular value set of any image block of any channel of any of the denoised images.

In some optional implementations, the first determination unit 520 includes:
a ninth determination sub-unit 523, configured to, for any image block of any channel of any of the denoised images: determine a dispersion degree of pixel values of any image block of any channel to obtain a difference dispersion degree of any image block of any channel of any of the denoised images.

In some optional implementations, the first determination unit 520 includes:

a tenth determination sub-unit 524, configured to, for any image block of any channel of any of the denoised images: determine a singular value dispersion degree of the singular value set of any image block of any channel of any of the denoised images based on the singular value set of any image block of any channel of any of the denoised images.

In some optional implementations, the second determination unit 530 includes:
an eleventh determination sub-unit 537, configured to: determine the target parameter value group for image denoising processing based on the difference dispersion degrees and the singular value dispersion degrees respectively corresponding to each channel of each image block of the multiple denoised images and the parameter value groups respectively corresponding to the multiple denoised images.

In some optional implementations, the number of undenoised images is a preset number, and different undenoised images correspond to different scenes;
the second determination unit 530 includes:
a twelfth determination sub-unit 538, configured to: for any undenoised image among the multiple undenoised images, determine a parameter value group for image denoising processing corresponding to any undenoised image based on the difference dispersion degrees, the singular value dispersion degrees, and the parameter value groups respectively corresponding to the multiple denoised images corresponding to any undenoised image;
a thirteenth determination sub-unit 539, configured to: determine the target parameter value group based on the parameter value groups for image denoising processing respectively corresponding to the multiple undenoised images.

The exemplary embodiments of this apparatus correspond to the denoising parameter determination method section in terms of implementation, and the corresponding content between the two can be mutually referenced, combined, and cited, which will not be described in detail here. The beneficial technical effects corresponding to the exemplary embodiments of this apparatus can refer to the corresponding beneficial technical effects of the denoising parameter determination method section, which will not be described in detail here.

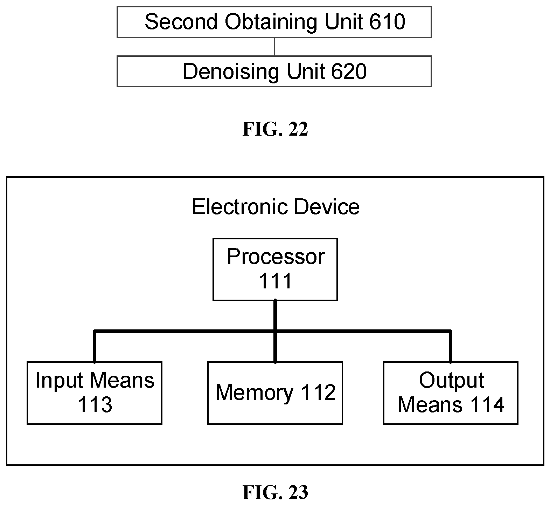

FIG. 22 is a schematic structural diagram of an image denoising apparatus provided by an exemplary embodiment of the present disclosure. The image denoising apparatus of the embodiments of the present disclosure can be used to implement the image denoising method of any of the above embodiments. As shown in FIG. 22, the image denoising apparatus of this embodiment includes:
a second obtaining unit 610, configured to: obtain an image to be denoised and a target parameter value group of denoising parameters, wherein the target parameter value group is determined using any of the above denoising parameter determination apparatuses;
a denoising unit 620, configured to: perform denoising processing on the image to be denoised based on the target parameter value group.

The exemplary embodiments of this apparatus correspond to the image denoising method section in terms of implementation, and the corresponding content between the two can be mutually referenced, combined, and cited, which will not be described in detail here. The beneficial technical effects corresponding to the exemplary embodiments of this apparatus can refer to the corresponding beneficial technical effects of the image denoising method section, which will not be described in detail here.

### Exemplary Electronic Device

FIG. 23 is a structural diagram of an electronic device provided by an embodiment of the present disclosure, including at least one processor 111 and a memory 112.

The processor 111 may be a Central Processing Unit (CPU) or other forms of processing units having data processing capabilities and/or instruction execution capabilities, and may control other components in the electronic device to perform desired functions.

The memory 112 may include one or more computer program products, and the computer program products may include various forms of computer-readable storage media, such as volatile memory and/or non-volatile memory. The volatile memory may include, for example, Random Access Memory (RAM) and/or cache memory etc. The non-volatile memory may include, for example, Read-Only Memory (ROM), hard disks, flash memory, etc. One or more computer program instructions may be stored on the computer-readable storage medium, and the processor 111 may run one or more computer program instructions to implement the denoising parameter determination or image denoising methods of the various embodiments of the present disclosure described above and/or other desired functions.

In one example, the electronic device may further include: an input means 113 and an output means 114, which are interconnected through a bus system and/or other forms of connection mechanisms (not shown).

The input means 113 may further include, for example, a keyboard, a mouse, etc.

The output means 114 may output various information to the outside, and may include, for example, a display, a speaker, a printer, a communication network and its connected remote output devices, etc.

Of course, for simplification, FIG. 23 only shows some of the components in the electronic device related to the present disclosure, and components such as buses, input/output interfaces, etc. are omitted. In addition, depending on specific application situations, the electronic device may further include any other suitable components.

### Exemplary Computer Program Product and Computer-Readable Storage Medium

In addition to the above methods and devices, embodiments of the present disclosure may further provide a computer program product, including computer program instructions, which, when run by a processor, cause the processor to execute the steps of the denoising parameter determination or image denoising methods of the various embodiments of the present disclosure described in the "Exemplary Method" section above.

The computer program product may be written in any combination of one or more programming languages to perform program code for the operations of the embodiments of the present disclosure. The programming languages include object-oriented programming languages, such as Java, C++, etc., as well as conventional procedural programming languages, such as the "C" language or similar programming languages. The program code may be executed entirely on a user computing device, partially on a user device, as a standalone software package, partially on a user computing device and partially on a remote computing device, or entirely on a remote computing device or server.

Furthermore, embodiments of the present disclosure may also be a computer-readable storage medium having computer program instructions stored thereon, which, when run by a processor, cause the processor to execute the steps of the denoising parameter determination or image denoising methods of the various embodiments of the present disclosure described in the "Exemplary Method" section above.

The computer-readable storage medium may employ any combination of one or more readable media. The readable medium may be a readable signal medium or a readable storage medium. The readable storage medium may include, for example but not limited to, electrical, magnetic, optical, electromagnetic, infrared, or semiconductor systems, apparatuses, or devices, or any combination thereof. More specific examples (a non-exhaustive list) of the readable storage medium include: electrical connections having one or more wires, portable disks, hard disks, Random Access Memory (RAM), Read-Only Memory (ROM), Erasable Programmable Read-Only Memory (EPROM or flash memory), optical fibers, Portable Compact Disc Read-Only Memory (CD-ROM), optical storage devices, magnetic storage devices, or any suitable combination thereof.

The basic principles of the present disclosure have been described above in conjunction with specific embodiments. However, the advantages, effects, etc. mentioned in the present disclosure are merely examples rather than limitations, and should not be considered as necessary for each embodiment of the present disclosure. Moreover, the specific details disclosed above are merely for the purpose of illustration and ease of understanding rather than limitation, and the above details do not limit the present disclosure to being necessarily implemented using the above specific details.

Those skilled in the art can make various modifications and variations to the present disclosure without departing from the spirit and scope of the present application. Thus, if these modifications and variations of the present application fall within the scope of the claims of the present disclosure and their equivalent technologies, the present disclosure is also intended to encompass these modifications and variations.

## Claims

1. A denoising parameter determination method, comprising:
obtaining multiple denoised images corresponding to an undenoised image, wherein any of the denoised images is obtained by performing denoising processing on the undenoised image using multiple denoising parameters under a corresponding parameter value group;
for any of the denoised images:
determining a difference between any of the denoised images and the undenoised image to obtain a difference image corresponding to any of the denoised images;
determining a difference dispersion degree of the difference image corresponding to any of the denoised images; and
performing singular value decomposition on the difference image corresponding to any of the denoised images to obtain a singular value set corresponding to any of the denoised images; and determining a singular value dispersion degree of the singular value set corresponding to any of the denoised images; and
based on the difference dispersion degrees, the singular value dispersion degrees respectively corresponding to the multiple denoised images, and the parameter value groups respectively corresponding to the multiple denoised images, determining a target parameter value group for image denoising processing.

2. The method according to claim 1, wherein the determining a target parameter value group for image denoising processing based on the difference dispersion degrees, the singular value dispersion degrees respectively corresponding to the multiple denoised images, and the parameter value groups respectively corresponding to the multiple denoised images comprises:
for any of the denoised images among the multiple denoised images:
obtaining a denoising parameter evaluation value corresponding to any of the denoised images based on the difference dispersion degree and the singular value dispersion degree corresponding to any of the denoised images;
determining the target parameter value group for image denoising processing based on the denoising parameter evaluation values respectively corresponding to the multiple denoised images and the parameter value groups respectively corresponding to the multiple denoised images.

3. The method according to any one of claims 1-2, wherein the obtaining multiple denoised images corresponding to a undenoised image comprises:
for any denoising parameter among M denoising parameters:
determining N first parameter values from a value range of any denoising parameter, wherein M and N are both positive integers;
determining a first parameter value group set based on the N first parameter values corresponding to any denoising parameter among the M denoising parameters, wherein the first parameter value in a first parameter value group in the first parameter value group set has a one-to-one correspondence between the first parameter values therein and the denoising parameters among the M denoising parameters, and any two first parameter value groups in the first parameter value group set include at least one pair of different first parameter values for the same denoising parameter;
for any first parameter value group in the first parameter value group set, performing denoising processing on the undenoised image using any first parameter value group to obtain a first denoised image.

4. The method according to claim 3, wherein the determining N first parameter values from a value range of any denoising parameter comprises:
determining a sampling interval corresponding to any denoising parameter based on the value range of any denoising parameter and a preset selection quantity;
determining N first parameter values from the value range of any denoising parameter based on the sampling interval.

5. The method according to claim 3, wherein the determining a target parameter value group for image denoising processing based on the difference dispersion degrees, the singular value dispersion degrees respectively corresponding to the multiple denoised images, and the parameter value groups respectively corresponding to the multiple denoised images comprises:
determining an initial parameter value group from the parameter value groups respectively corresponding to the multiple denoised images based on the difference dispersion degrees and the singular value dispersion degrees respectively corresponding to the multiple denoised images;
for any denoising parameter among the preset M denoising parameters:
determining an initial parameter value corresponding to any denoising parameter from the initial parameter value group;
determining X second parameter values within a neighborhood range of the initial parameter value from the value range of any denoising parameter, wherein X is a positive integer;
determining a second parameter value group set based on the X second parameter values corresponding to any denoising parameter among the M denoising parameters, wherein the second parameter value in a second parameter value group in the second parameter value group set has a one-to-one correspondence between the second parameter values therein and the denoising parameters among the M denoising parameters, and any two second parameter value groups in the second parameter value group set include at least one pair of different second parameter values for the same denoising parameter;
for any second parameter value group in the second parameter value group set, performing denoising processing on the undenoised image using any second parameter value group to obtain a second denoised image;
determining the target parameter value group for image denoising processing based on the difference dispersion degrees, the singular value dispersion degrees respectively corresponding to the multiple second denoised images, and the parameter value groups respectively corresponding to the multiple second denoised images.

6. The method according to any one of claims 1-5, wherein the determining a difference between any of the denoised images and the undenoised image comprises:
determining a difference between pixel values of any channel of any of the denoised images and pixel values of a corresponding channel of the undenoised image to obtain a difference image corresponding to any channel of any of the denoised images.

7. The method according to claim 6, wherein the performing singular value decomposition on the difference image corresponding to any of the denoised images to obtain a singular value set corresponding to any of the denoised images comprises:
for the difference image of any channel of any of the denoised images:
dividing the difference image of any channel to obtain multiple image blocks of any channel; and
performing singular value decomposition on pixel values of any image block of any channel to obtain a singular value set of any image block of any channel of any of the denoised images.

8. The method according to claim 7, wherein the determining a difference dispersion degree of the difference image corresponding to any of the denoised images comprises:
for any image block of any channel of any of the denoised images: determining a dispersion degree of pixel values of any image block of any channel to obtain a difference dispersion degree of any image block of any channel of any of the denoised images; and/or
wherein the determining a singular value dispersion degree of the singular value set corresponding to any of the denoised images comprises:
for any image block of any channel of any of the denoised images: determining a singular value dispersion degree of the singular value set of any image block of any channel of any of the denoised images based on the singular value set of any image block of any channel of any of the denoised images.

9. The method according to claim 8, wherein the determining a target parameter value group for image denoising processing based on the difference dispersion degrees, the singular value dispersion degrees respectively corresponding to the multiple denoised images, and the parameter value groups respectively corresponding to the multiple denoised images comprises:
determining the target parameter value group for image denoising processing based on the difference dispersion degrees and the singular value dispersion degrees respectively corresponding to a channel of an image block of the multiple denoised images and the parameter value groups respectively corresponding to the multiple denoised images.

10. The method according to any one of claims 1-5, wherein the number of undenoised images is a preset number, and different undenoised images correspond to different scenes;
the determining a target parameter value group for image denoising processing based on the difference dispersion degrees, the singular value dispersion degrees respectively corresponding to the multiple denoised images, and the parameter value groups respectively corresponding to the multiple denoised images comprises:
for any undenoised image among the multiple undenoised images, determining a parameter value group corresponding to any undenoised image for image denoising processing based on the difference dispersion degrees, the singular value dispersion degrees respectively corresponding to the multiple denoised images corresponding to any undenoised image, and the parameter value groups respectively corresponding to the multiple denoised images corresponding to any undenoised image;
determining the target parameter value group based on the parameter value groups for image denoising processing respectively corresponding to the multiple undenoised images.

11. An image denoising method, comprising:
obtaining an image to be denoised and a target parameter value group of denoising parameters, wherein the target parameter value group is determined using the denoising parameter determination method according to any one of claims 1-10;
performing denoising processing on the image to be denoised based on the target parameter value group.

12. A denoising parameter determination apparatus, comprising:
a first obtaining unit, configured to: obtain multiple denoised images corresponding to a undenoised image, wherein any of the denoised images is obtained by performing denoising processing on the undenoised image using multiple denoising parameters under a corresponding parameter value group;
a first determination unit, configured to, for any of the denoised images:
determine a difference between any of the denoised images and the undenoised image to obtain a difference image corresponding to any of the denoised images;
determine a difference dispersion degree of the difference image corresponding to any of the denoised images; and
perform singular value decomposition on the difference image corresponding to any of the denoised images to obtain a singular value set corresponding to any of the denoised images; and determine a singular value dispersion degree of the singular value set corresponding to any of the denoised images;
a second determination unit, configured to: determine a target parameter value group for image denoising processing based on the difference dispersion degrees, the singular value dispersion degrees respectively corresponding to the multiple denoised images, and the parameter value groups respectively corresponding to the multiple denoised images.

13. An image denoising apparatus, comprising:
a second obtaining unit, configured to: obtain an image to be denoised and a target parameter value group of denoising parameters, wherein the target parameter value group is determined using the denoising parameter determination apparatus according to claim 12;
a denoising unit, configured to: perform denoising processing on the image to be denoised based on the target parameter value group.

14. A computer-readable storage medium, storing a computer program thereon, which, when executed, is used to implement the method according to any one of claims 1-11.

15. An electronic device, the electronic device comprising:
a processor;
a memory for storing executable instructions of the processor;
the processor, configured to read the executable instructions from the memory and execute the instructions to implement the method according to any one of claims 1-11.
